# EUROPÄISCHE PATENTSCHRIFT

(11) **EP 1 885 584 B1**
(45) Veröffentlichungstag und Bekanntmachung des Hinweises auf die Patenterteilung: **19.11.2008**
(21) Anmeldenummer: 06753894.2
(22) Anmeldetag: 26.05.2006
(51) Int. Cl.: B60R 21/26

(54) **GASGENERATOREINHEIT**
GAS GENERATOR UNIT
UNITE GENERATRICE DE GAZ

(30) Priorität: 03.06.2005 DE 202005008847 U
(43) Veröffentlichungstag der Anmeldung: 13.02.2008
(73) Patentinhaber: Autoliv Development AB, 44783 Vargarda (SE)
(72) Erfinder: HUBER, Joachim, 85414 Kirchdorf (DE); WITTMANN, Ernst, 85241 Hebertshausen (DE)
(74) Vertreter: Schön, Thilo
(86) Internationale Anmeldenummer: PCT/EP2006/005031
(87) Internationale Veröffentlichungsnummer: WO 2006/128640

(56) Entgegenhaltungen:
- EP-A- 0 800 960
- WO-A-03/070527
- WO-A-20/05120906
- DE-U1-5202004 016 97

## Beschreibung

### Technisches Gebiet der Erfindung

Die Erfindung betrifft eine Gasgeneratoreinheit nach dem Oberbegriff des Anspruchs 1.

Zur Befüllung von Gassäcken sind zylindrische Gasgeneratoren bekannt, deren Mantelfläche innerhalb eines ringförmigen Bereiches schubneutral angeordnete Ausströmöffnungen aufweist. Der ringförmige Bereich kann hierbei relativ klein sein, oder sich über nahezu die gesamte Länge der Mantelfläche erstrecken. Eine solche Anordnung der Ausströmöffnungen hat den Vorteil, dass bei einer versehentlichen Zündung der Gasgeneratoren - bspw. bei einem Lagerbrand - die Gasgeneratoren nicht durch das ausströmende Gas nach Art einer Rakete beschleunigt werden.

### Stand der Technik

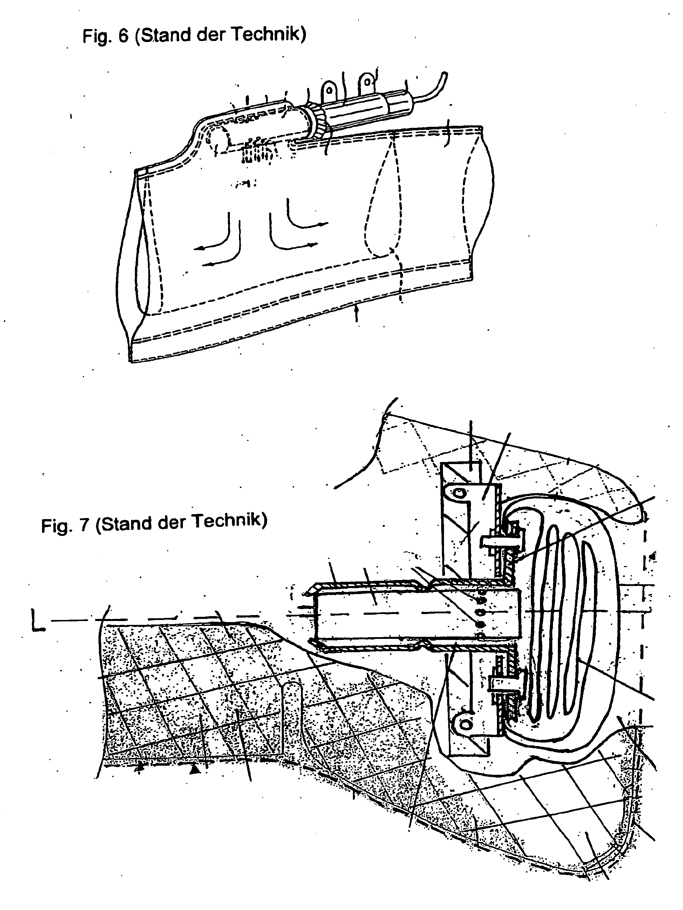

In vielen Anwendungsfällen ist es jedoch notwendig, den von einem solchen Gasgenerator kommenden Gasstrom ganz oder teilweise umzulenken. Beispielsweise aus der gattungsbildenden WO 02/079008 A1 ist es bekannt, auf der Mantelfläche eines solchen Gasgenerators ein Deflektorelement mit einem halbkreisförmigen Querschnitt anzuordnen, wobei das Deflektorelement die Hälfte der Ausströmöffnungen abdeckt. Dies dient dazu, umliegendes Gassackgewebe zu schützen und führt zu einer gerichteten, bezüglich der Längsachse des Gasgenerators radialen Strömungsrichtung des ausströmenden Gases (s. Figur 6).

Die DE 20 2004 009 002.3 zeigt u. a. eine Gasgeneratoreinheit, bei der der zylindrische Gasgenerator von einer ein Deflektorelement bildenden Hülse umgeben ist, die den Gasstrom axial umlenkt (s. Figur 7).

Häufig werden die aus einem Gasgenerator und einem starr mit dem Gasgenerator verbundenen Deflektorelement bestehenden Gasgeneratoreinheiten als Baugruppe vorgefertigt und gegebenenfalls zwischengelagert. Hierdurch ergibt sich jedoch der Nachteil, dass dann keine Schubneutralität gegeben ist und die Gasgeneratoreinheiten im Falle eines Lagerbrandes eine erhebliche Gefahr darstellen.

Das Dokument DE 20 2004 016975 U1 offenbart eine Gasgeneratoreinheit bestehend aus einem zylindrischen Gasgenerator, dessen Mantelfläche innerhalb eines ringförmigen Bereiches schubneutral angeordnete Ausströmöffnungen aufweist und einem starr mit dem Gasgenerator verbundenen Deflektorelement, das den ringförmigen Bereich umgibt, wobei das Deflektorelement aus einem im Brandfall schmelz- oder brennbaren Material besteht. Hierbei ist jedoch im Brandfall die mechanische Stabilität des Deflektorelementes nicht mehr gegeben.

### Gegenstand der Erfindung

Die Erfindung stellt sich daher die Aufgabe, eine gattungsgemäße Gasgeneratoreinheit dahingehend weiterzubilden, dass sie im Falle eines Lagerbrandes ungefährlich ist, insbesondere nicht umherfliegt.

Diese Aufgabe wird durch eine Gasgeneratoreinheit mit den Merkmalen des Anspruchs 1 gelöst.

Das Deflektorelement der erfindungsgemäßen Gasgeneratoreinheit weist im Anströmbereich, also in demjenigen Bereich, der den Ausströmöffnungen gegenüberliegt, Bohrungen auf, die jeweils von einem Verschlusselement aus schmelz- oder brennbarem Material verschlossen sind. Hierbei kann ein einziges Verschlusselement für alle Bohrungen oder für jede Bohrung ein separates Verschlusselement vorhanden sein. Dicke und Material dieser Verschlusselemente sind so gewählt, dass sie dem aus dem Gasgenerator ausströmenden Gas für die kurze Dauer, während derer das Ausströmen des Gases geschieht, widerstehen kann, bei längerer Wärmeeinwirkung - beispielsweise deutlich mehr als 100 Grad über mehrere Minuten - jedoch seine mechanische Stabilität verliert, in dem es verbrennt oder schmilzt. Das Deflektorelement selbst besteht aus einem hitzebeständigen Material, vorzugsweise aus Metall.

Vorteilhafte Ausführungsformen der Erfindung ergeben sich aus den Unteransprüchen sowie wie aus den nun mit Bezug auf die Zeichnungen näher dargestellten Ausführungsbeispielen. Hierbei zeigen:

### Kurzbeschreibung der Zeichnungen

- Figur 1: eine erste Ausführungsform einer Gasgeneratoreinheit in einer Draufsicht von der Seite,
- Figur 2: die Gasgeneratoreinheit aus Figur 1 entlang einer Draufsicht entlang der Sichtlinie A-A aus Figur 1,
- Figur 3: die Gasgeneratoreinheit mit einem Schnitt entlang der Ebene B-B aus Figur 1,
- Figur 4: eine zweite Ausführungsform einer Gasgeneratoreinheit in einer seitlichen Draufsicht,
- Figur 5: die Gasgeneratoreinheit aus Figur 4 im Längsschnitt,
- Figur 6: eine Darstellung des Standes der Technik und
- Figur 7: eine weitere Darstellung des Standes der Technik.

### Beschreibung bevorzugter Ausführungsformen

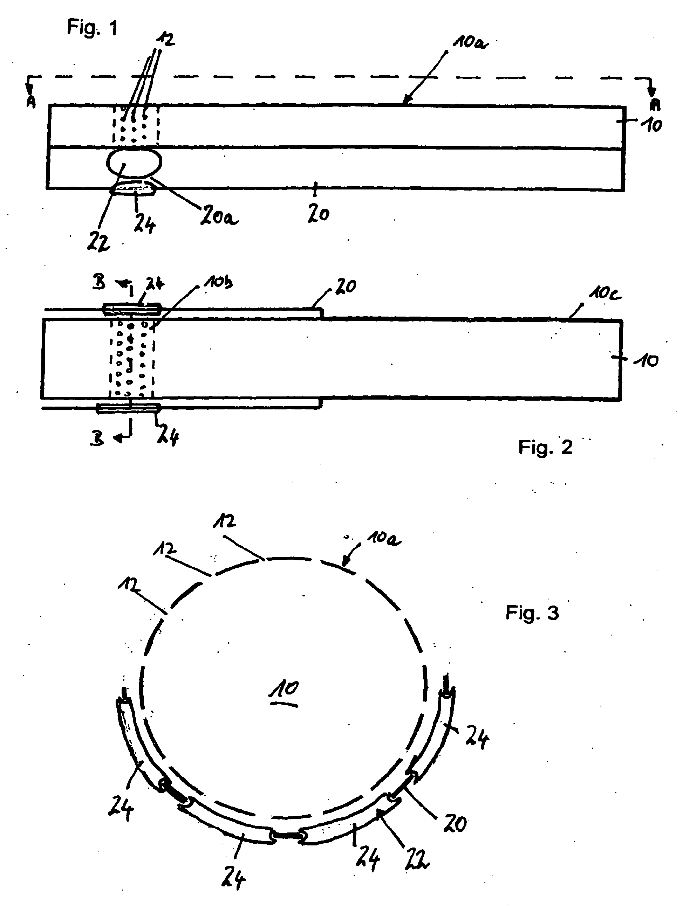

Figuren 1 bis 3 zeigen ein erstes Ausführungsbeispiel. Die Gasgeneratoreinheit besteht aus einem zylindrischen Gasgenerator 10 und einem Deflektorelement 20. Innerhalb eines ringförmigen Bereiches 10b der Mantelfläche 10a des Gasgenerators 10 befinden sich die Ausströmöffnungen 12. Das Deflektorelement 20 erstreckt sich über die gesamte Länge des Gasgenerators 10 und hat einen halbkreisförmigen Querschnitt. In einem hinteren Abschnitt 10c liegt das Deflektorelement 20 an der Mantelfläche 10a des Gasgenerators 10 an.

Dem ringförmigen Bereich 10b, in welchem sich die Ausströmöffnungen 12 befinden, liegt der Anströmbereich 20a des Deflektorelementes 20 gegenüber. Dieser wird unmittelbar vom vom Gasgenerator kommenden Gasstrahl getroffen. In diesem Anströmbereich 20a sind Bohrungen 22 angeordnet. Diese Bohrungen sind relativ großflächig und nur durch relativ dünne Stege miteinander verbunden. In jeder dieser Bohrungen 22 ist ein Verschlusselement 24 vorgesehen, welches aus Kunststoff besteht. Die Verschlusselemente 24 können durch Einspritzen von Kunststoff in die Bohrungen 22 gebildet werden. Hierbei umgreifen die Verschlusselemente 24 den Rand der Bohrungen 22 etwas, so dass sich eine formschlüssige Verbindung ergibt (in Figur 3 lediglich schematisch dargestellt). Material und Dicke der Verschlusselemente 24 muss in Abhängigkeit von der Geometrie und von der Gasgeneratorleistung so gewählt sein, dass die Verschlusselemente über die Betätigungszeit des Gasgenerators mechanisch stabil bleiben. Das Material ist weiterhin so gewählt, dass es seine mechanische Festigkeit verliert oder verbrennt, wenn es über einen längeren Zeitraum, d. h. in der Regel über mehrere Minuten der Hitze, beispielsweise über 200°C, ausgeliefert ist. Viele Kunststoffe erfüllen diese Forderungen. Das Deflektorelement besteht vorzugsweise aus Stahlblech.

Wird der Gasgenerator betätigt, verhält sich die Gasgeneratoreinheit wie die in Figur 1 gezeigte, d. h. das Gas wird so abgelenkt, dass es in eine Richtung gerichtet radial von der Gasgeneratoreinheit abströmt. Im Brandfall jedoch werden die Bohrungen frei und das Gas strömt in alle radialen Richtungen, so dass sich die Gasgeneratoreinheit schubneutral verhält.

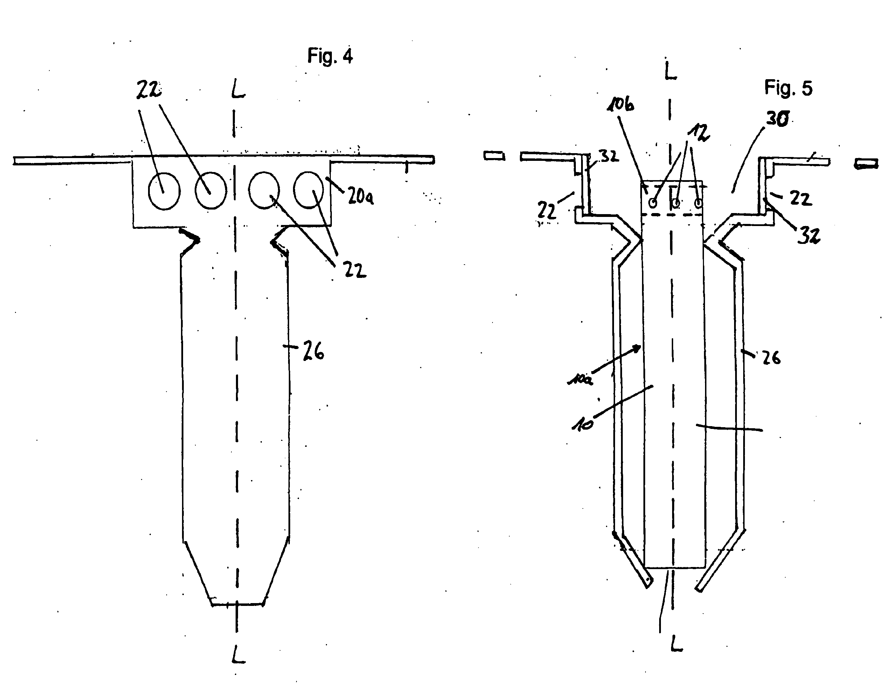

Die Figuren 4 und 5 zeigen eine Gasgeneratoreinheit, wie sie bspw. in einer Anordnung eingesetzt werden kann, wie sie in Figur 7 gezeigt ist.

Das Deflektorelement ist hier durch die Hülse 26 gebildet und besteht vorzugsweise aus Metall. Im Bereich des Ringspaltes 30, der sich zwischen dem ringförmigen Bereich 10b der Mantelfläche 10a und der Hülse 26 befindet weist die Hülse im wesentlichen dem Gasaustrittsöffnung 12 gegenüberliegende Bohrungen 22 auf. Diese sind vom Kunststoffring 32 abgedeckt, der in die Hülse 26 eingelegt ist, und hier das Verschlusselement bildet. Material und Dicke dieses Kunststoffrings 32 sind so gewählt, dass er für die Dauer des Betriebes des Gasgenerators seine Stabilität behält. Kommt es jedoch zu einem Lagerbrand, so schmilzt der Kunststoffring 32 und gibt die Bohrungen 22 frei, so dass ein großer Teil der von den Gasaustrittsöffnungen 12 kommenden Gase durch diese symmetrisch angeordneten Bohrungen 22 entweicht, wodurch sich die Gasgenerator-Einheit im wesentlichen schubneutral verhält.

In beiden Ausführungsbeispielen ist das Deflektorelement starr mit dem Gasgenerator verbunden. Dies wird in beiden Fällen unter anderem dadurch erreicht, dass das Deflektorelement abschnittsweise auf der Mantelfläche des Gasgenerators aufliegt. In der Regel sind weitere Verbindungsmittel vorgesehen, die hier jedoch nicht dargestellt sind.

Das Deflektorelement besteht in beiden Ausführungsformen vorzugsweise aus Metall. Es sind jedoch aus andere Materialien denkbar, vorausgesetzt sie sind wesentlich hitzebeständiger als die Verschlusselemente.

### Bezugszeichenliste

- 10: Gasgenerator
- 10a: Mantelfläche
- 10b: ringförmiger Bereich
- 10c: hinterer Abschnitt
- 12: Ausströmöffnung
- 20: Deflektorelement
- 20a: Anstömbereich
- 22: Bohrung
- 24: Verschlusselement
- 26: Hülse
- 30: Ringspalt
- 32: Kunststoffring

## Patentansprüche

1. Gasgeneratoreinheit bestehend aus einem zylindrischen Gasgenerator (10), dessen Mantelfläche (10a) innerhalb eines ringförmigen Bereiches (10b) schubneutral angeordnete Ausströmöffnungen (12) aufweist, und einem starr mit dem Gasgenerator (10) verbundenen Deflektorelement (20) aus einem hitzebeständigen Material, das zumindest den ringförmigen Bereich (10b) zumindest teilweise umgibt, **dadurch gekennzeichnet, dass** das Deflektorelement (20) in dem dem ringförmigen Bereich (10b) gegenüberliegenden Anströmbereich (20a) Bohrungen (22) aufweist, welche von wenigstens einem Verschlusselement (24,32) aus einem schmelz- oder brennbaren Material verschlossen sind, wobei die Bohrungen so angeordnet sind, dass bei Abwesenheit des Verschlusselements (24, 32) die Gasgeneratoreinheit schubneutral ist.

2. Gasgeneratoreinheit nach Anspruch 1, **dadurch gekennzeichnet, dass** das Deflektorelement ein Hohlzylinder (Hülse 26) ist, und zwischen Mantelfläche und Deflektorelement ein Ringspalt (30) ausgebildet ist.

3. Gasgeneratoreinheit nach Anspruch 1, **dadurch gekennzeichnet, dass** das Deflektorelement (20) einen U- oder halbkreisförmigen Querschnitt hat.

4. Gasgeneratoreinheit nach einem der vorangehenden Ansprüche, **dadurch gekennzeichnet, dass** das Deflektorelement (20) aus Metall besteht.

5. Gasgeneratoreinheit nach einem der vorangehenden Ansprüche, **dadurch gekennzeichnet, dass** das Verschlusselement aus Kunststoff besteht.

6. Gasgeneratoreinheit nach einem der vorangehenden Ansprüche, **dadurch gekennzeichnet, dass** das Verschlusselement einstückig ausgebildet und in das Deflektorelement eingelegt ist.

7. Gasgeneratoreinheit nach einem der vorangehenden Ansprüche, **dadurch gekennzeichnet, dass** das Deflektorelement ausschließlich im Anströmbereich Bohrungen aufweist.

8. Gasgeneratoreinheit nach einem der vorangehenden Ansprüche, **dadurch gekennzeichnet, dass** das Deflektorelement zumindest abschnittsweise direkt mit der Mantelfläche des Gasgenerators verbunden ist.

## Claims

1. Gas generator unit consisting of a cylindrical gas generator (10), whose generated surface (10a) shows thrust-neutrally arranged outlet openings within an annular area (10b), and a deflector element (20) made of a heat resistant material being rigidly connected to the gas generator (10) and surrounding at least the annular area (10b) at least partially,
**characterised in that** the deflector element (20) has borings (22) in the blow area lying opposite to the annular area (10b), said borings being closed by a closing element (24,32) made of a fusible or flammable material, whereby the borings are arranged such that in absence of the closing element (24,32) the gas generator unit is thrust neutral.

2. Gas generator unit according to claim 1, **characterised in that** the deflector element is a hollow cylinder (sleeve 26) and that an annular gap (30) is provided between the generated surface and the deflector element.

3. Gas generator according to claim 1, **characterised in that** the deflector element (20) has a U-shaped or semicircular-shaped cross section.

4. Gas generator unit according to one of the preceding claims, **characterised in that** the deflector element (20) consists of metal.

5. Gas generator unit according to one of the preceding claims, **characterised in that** the closing element consists of plastic.

6. Gas generator unit according to one of the preceding claims, **characterised in that** the closing element is made in one piece and is inlaid into the deflector element.

7. Gas generator unit according to one of the preceding claims, **characterised in that** the deflector element shows borings only in the blow area.

8. Gas generator unit according to one of the preceding claims, **characterised in that** the deflector element is connected directly to the generated surface of the gas generator at least in sections.

## Revendications

1. Unité génératrice de gaz constituée d'un générateur de gaz cylindrique (10), dont la surface d'enveloppe (10a) comprend à l'intérieur d'une zone annulaire (lOb) des ouvertures d'évacuation (12) disposées de manière neutre en terme de poussée, et un élément déflecteur (20) relié solidement au générateur de gaz (10) constitué d'un matériau résistant à la chaleur, qui entoure au moins en partie la zone annulaire (lOb), **caractérisée en ce que** l'élément déflecteur (20) comprend dans la zone d'arrivée du flux (20a) opposée à la zone annulaire (lOb) des alésages (22), lesquels sont ferlés par au moins un élément de fermeture (24, 32) fabriqué à partir d'un matériau fusible ou combustible, les alésages étant disposés de sorte qu'en l'absence de l'élément de fermeture (24, 32) l'unité génératrice de gaz est neutre en matière de poussée.

2. Unité génératrice de gaz selon la revendication 1, **caractérisée en ce que** l'élément déflecteur est un cylindre creux (manchon 26), et un espace annulaire (30) est conçu entre la surface d'enveloppe et l'élément déflecteur.

3. Unité génératrice de gaz selon la revendication 1, **caractérisée en ce que** l'élément déflecteur (20) présente une section transversale en forme de U ou de demi-cercle.

4. Unité génératrice de gaz selon l'une quelconque des revendications précédentes, **caractérisée en ce que** l'élément déflecteur (20) est constitué de métal.

5. Unité génératrice de gaz selon l'une quelconque des revendications précédents, **caractérisée en ce que** l'élément de fermeture est constitué de matière plastique..

6. Unité génératrice de gaz selon l'une quelconque des revendications précédentes, **caractérisée en ce que** l'élément de fermeture est conçu en une seule pièce et inséré dans l'élément déflecteur.

7. Unité génératrice de gaz selon l'une quelconque des revendications précédentes, **caractérisée en ce que** l'élément déflecteur comprend des alésages exclusivement dans la zone d'arrivée du flux.

8. Unité génératrice de gaz selon l'une quelconque des revendications précédentes, **caractérisée en ce que** l'élément déflecteur est relié au moins par sections directement à la surface d'enveloppe du générateur de gaz.
